# EUROPEAN PATENT SPECIFICATION

(11) **EP 4 124 476 B1**
(45) Date of publication and mention of the grant of the patent: **15.11.2023**
(21) Application number: 22171973.5
(22) Date of filing: 06.05.2022
(51) Int. Cl.: B60D 1/06, B60D 1/54, B60D 1/26

(54) **MANUAL AND ELECTRIC DUAL-MODE TRAILER HITCHING APPARATUS**
MANUELLES UND ELEKTRISCHES ANHÄNGERKUPPLUNGSGERÄT MIT ZWEI BETRIEBSARTEN
APPAREIL D'ATTELAGE DE REMORQUE BIMODE MANUEL ET ÉLECTRIQUE

(30) Priority: 26.07.2021 CN 202121699575 U
(43) Date of publication of application: 01.02.2023
(73) Proprietor: Zhejiang Zhiyou Automotive Technology Co., Ltd., Zhejiang, Shaoxing 312500 (CN)
(72) Inventor: Xu, Naiyong, Shaoxing, 312500 (CN); Wang, Yu, Shaoxing, 312500 (CN); Shao, Junjian, Shaoxing, 312500 (CN); Xuan, Quanli, Shaoxing, 312500 (CN); Zhang, Dongyu, Shaoxing, 312500 (CN); Zhu, Fengdong, Shaoxing, 312500 (CN); Han, Zhengxin, Shaoxing, 312500 (CN); Liu, Ya, Shaoxing, 312500 (CN); Li, Tao, Shaoxing, 312500 (CN); Ding, Wenbing, Shaoxing, 312500 (CN); Sun, Lingxin, Shaoxing, 312500 (CN)
(74) Representative: karo IP

(56) References cited:
- EP-A1- 1 253 027
- DE-A1- 19 858 978

## Description

### FIELD OF TECHNOLOGY

Embodiments of the present disclosure relate to trailer hitching apparatuses, and more particularly to a manual and electric dual-mode trailer hitching apparatus.

### BACKGROUND

A trailer hitch, which is generally attached to the tail of a vehicle, may serve to tow an object or pull out a trapped vehicle.

Since a deployed trailer hitch projects from the vehicle tail, it poses potential traffic hazards on road and likely incurs bump upon parking. Therefore, the trailer hitch is usually stored in cases of no hitching need, and is only deployed in cases of hitching. To facilitate use of the trailer hitch, a motor is generally leveraged as a power source for shifting the trailer hitch between a stored status and a deployed status, thereby achieving motorization. However, in cases of motor faults or lack of power, the motor in turn becomes a hindrance to use the trailer hitch. A manual and electric dual-mode trailer hitch apparatus is known from DE 198 58 978 A1.

### SUMMARY

The technical problem to be solved by the present disclosure is to overcome the shortcomings of the prior art and propose a manual and electric dual-mode trailer hitching apparatus, which enables manual maneuvering of the trailer hitch in cases of motor faults or lack of power. The invention is defined by the appended claims.

To solve the above technical problems, the present invention adopts the following technical solution:
a manual and electric dual-mode trailer hitching apparatus, comprising: a trailer hitch and a driving device for actuating the trailer hitch, wherein the driving device comprises a housing, a motor, a transmission arrangement, a main shaft, and a rotary shaft, the trailer hitch being coupled to the main shaft, the rotary shaft having an automated position and a manual position, the rotary shaft comprising a first transmission section, a second transmission section, and a rotating section between the first transmission section and the second transmission section; wherein when the rotary shaft moves axially to the automated position, the first transmission section is fitted with the transmission arrangement, and the second transmission section is fitted with the main shaft, such that the motor drives the rotary shaft and the main shaft to rotate via the transmission arrangement; wherein when the rotary shaft moves axially to the manual position, the second transmission section is fitted with the main shaft, such that the rotary shaft rotates relative to the transmission arrangement; and wherein a locking member is detachably mounted on the housing, the locking member being configured to hold the rotary shaft at the automated position.

In an embodiment, a through-hole is provided in the transmission arrangement, the rotary shaft passing through the through-hole.

In an embodiment, a first driving surface is provided on the first transmission section, and a second driving surface is provided on an inner wall of the through-hole, such that when the rotary shaft is disposed at the automated position, the first driving surface and the second driving surface are fitted to drive the rotary shaft to rotate.

In an embodiment, a locking disc is provided between the rotary shaft and the main shaft, the rotary shaft driving the main shaft via the locking disc; wherein a third driving surface is provided on the locking disc, and a fourth driving surface is provided on the second transmission section, the fourth driving surface maintaining fitted with the third driving surface.

In an embodiment, a stop member is provided for one of the transmission arrangement and the rotary shaft, the stop member being configured to stop the rotary shaft when the rotary shaft axially shifts to the manual position, thereby blocking fitting between the fourth driving surface and the transmission arrangement.

In an embodiment, an opening is provided in the housing corresponding to the rotary shaft, the locking member being mounted at the opening and maintaining abutting against the rotary shaft.

In an embodiment, the locking member is thread-fitted with the housing; or, the locking member is snap-fitted with the housing.

In an embodiment, a ring of slot is provided around an outer periphery of the opening, and the locking member includes an apron inserted in the slot and maintaining interference-fitted with the housing; or, the locking member includes an apron, the apron being inserted in the opening and maintaining interference-fitted with the opening.

In an embodiment, an elastic member is provided in the driving device, the elastic member applying an axial force to the rotary shaft so as to provide a force for the rotary shaft to shift from the automated position to the manual position.

In an embodiment, bouncing means is further provided in the driving device, wherein the driving device at the automated position is opposite to the bouncing means to allow the rotary shaft, when being pressed, to shift to the manual position.

The present disclosure offers the following advantages:
Embodiments of the present disclosure disclose a manual and electric dual-mode trailer hitching apparatus, the driving device being configured to actuate the trailer hitch to be stored or deployed, so as to facilitate use, wherein the rotary shaft disposed in the driving device may drive the main shaft to rotate; since the trailer hitch is coupled to the main shaft, it may shift between a stored status and a deployed status following rotation of the main shaft.

The position of the rotary shaft in the driving device is variable so as to be capable of shifting between the automated position and the manual position; when the rotary shaft is disposed at the automated position, the first transmission section of the rotary shaft is fitted with the transmission arrangement such that a rotating power of the motor may be applied to the rotary shaft to drive the rotary shaft to rotate; after the rotary shaft shifts to the manual position, the transmission arrangement suspends transmitting the rotating power to the rotary shaft, such that the user may rotate the rotary shaft with a tool to manually drive the main shaft to rotate to shift between the statuses of the trailer hitch. Besides, when the rotary shaft is disposed at the manual position, the user's rotation of the rotary shaft does not drive the transmission arrangement, such that the motor and the transmission arrangement do not interfere with rotation of the rotary shaft. In this way, when the motor or the transmission arrangement fails or the driving device loses power, rotation of the trailer hitch may be manually maneuvered.

The locking member is configured to securely hold the position of the rotary shaft to avoid positional displacement of the rotary shaft which affects normal use of the trailer hitch; after the locking member is removed, the rotary shaft is released and thus enabled for positional shift of the trailer hitching apparatus from the automated mode to the manual mode.

Furthermore, a through-hole is provided on the transmission arrangement, the rotary shaft passing through the through-hole. The rotating power of the motor acts on the rotary shaft via the transmission arrangement. Arranging the through-hole in the transmission arrangement allows the rotary shaft to move axially, such that when the rotary shaft is disposed at the manual position, the first transmission section may be disengaged from the transmission arrangement, causing the motor not to drive the rotary shaft via the transmission arrangement.

Furthermore, a first driving surface is provided on the first transmission section, a second driving surface is provided on an inner wall of the through-hole, such that when the rotary shaft is disposed at the automated position, the first driving surface and the second driving surface are fitted to drive the rotary shaft to rotate. When the first driving surface is fitted with the second driving surface, the motor may apply a rotating power to the rotary shaft via the second driving surface; after the rotary shaft moves axially, the first transmission section exits the through-hole, and the first driving surface and the second driving surface are axially disengaged, such that the rotating power of the motor is not further applied on the rotary shaft; likewise, when the rotary shaft rotates, the transmission arrangement and the motor do not interfere with rotation of the rotary shaft via the second driving surface.

Furthermore, a locking disc is provided between the rotary shaft and the main shaft, the rotary shaft driving the main shaft via the locking disc; wherein a third driving surface is provided on the locking disc, and a fourth driving surface is provided on the second transmission section, the fourth driving surface maintaining fitted with the third driving surface. The fourth driving surface can transmit the rotating power to the third driving surface when the rotary shaft rotates, thereby driving the main shaft to rotate, while the third driving surface maintains fitted with the fourth driving surface. In this way, the rotary shaft may drive the main shaft irrespective of whether the rotary shaft is driven via the motor or by user maneuvering.

Furthermore, a stop member is provided for one of the transmission arrangement and the rotary shaft, the stop member being configured to stop the rotary shaft when the rotary shaft axially shifts to the manual position, thereby blocking fitting between the fourth driving surface and the transmission arrangement. Under the action of the stop member, an axial displacement distance of the rotary shaft relative to the driving device is limited, such that when the rotary shaft shifts to the manual position, the fourth driving surface is held external to the transmission arrangement while maintaining fitted with the third driving surface; in this way, when the trailer hitching apparatus is disposed in the manual mode, the fourth driving surface suspends transmitting the rotating power to the transmission arrangement and thus does not interfere with rotation of the rotary shaft.

Furthermore, an opening is provided in the housing corresponding to the rotary shaft, the locking member being mounted at the opening and maintaining abutting against the rotary shaft. By mounting the locking member on the housing, the rotary shaft is abutted against by the locking member and cannot move to the manual position, thereby holding the trailer hitch to the automated mode. By providing an opening in the housing at a position corresponding to the rotary shaft, wherein the rotary shaft projects out of the driving device from the opening, the user may directly access the rotary shaft and applies a rotating force to the exposed portion of the rotary shaft. This facilitates operation, and eliminates additional setting of a transmission member on the driving device to transmit a rotating force to the rotary shaft when the rotary shaft is in the manual position.

Furthermore, an elastic member is further provided in the driving device, the elastic member applying an axial force to the rotary shaft so as to provide a force to shift the rotary shaft from the automated position to the manual position. The elastic member can generate an elastic force, such that when the rotary shaft is disposed at the automated position, the elastic member maintains an accumulated elastic force, such that when the locking member is removed, the released rotary shaft can shift to the automated position under the elastic force; in this way, the user needn't manually pull the rotary shaft towards the manual position, which enhances user experience.

Furthermore, bouncing means is further provided in the driving device, wherein the driving device disposed at the automated position is opposite to the bouncing means so as to allow the rotary shaft, when being pressed, to shift to the manual position. The bouncing means is a standard element. To shift the rotary shaft between the automated position and the manual position, it is only needed to remove the locking member and press the rotary shaft towards the bouncing means, such that the bouncing means may output an elastic force to drive the rotary shaft to move axially; in this way, upon removal of the locking member, the rotary shaft does not pop out abruptly to strike the user; besides, the operation becomes easy because the user needn't pull the rotary shaft.

These characteristics and advantages of the present disclosure will be disclosed in detail in the following embodiments and the accompanying drawings below.

### BRIEF DESCRIPTION OF THE DRAWINGS

Hereinafter, the present disclosure will be described in further detail with reference to the accompanying drawings:
Fig. 1 is a structural schematic view of a trailer hitching apparatus in an embodiment of the present disclosure;
Fig. 2 is a sectional view of a driving device when a rotary shaft is disposed at an automated position in an embodiment of the present disclosure;
Fig. 3 is a local structural schematic view of the driving device in the embodiment of the present disclosure; and
Fig. 4 is a sectional view of the driving device when the rotary shaft is disposed at a manual position in an embodiment of the present disclosure.

### Reference Numerals:

trailer hitch 100, main shaft 110, locking member 120, connecting plate 130, shaft sleeve 140, cover plate 150, housing 160, opening 161;
rotary shaft 200, first driving surface 210, first transmission section 220, fourth driving surface 230, second transmission section 240, rotating section 250, step 260, elastic member 270;
locking disc 300, third driving surface 310;
transmission arrangement 400, through-hole 410, second driving surface 420, stop member 430.

### DETAILED DESCRIPTION

Hereinafter, the technical solutions of the embodiments of the present disclosure will be explained and illustrated with reference to the accompanying drawings corresponding to the embodiments of the present disclosure. However, the embodiments are only preferred embodiments of the present disclosure, not all of them. Other embodiments obtained by those skilled in the art without exercise of inventive work based on the examples in the embodiments all fall within the protection scope of the present disclosure.

In the description of the present disclosure, it needs to be understood that the orientational or positional relationships indicated by the terms "center," "longitudinal," "transverse," "length," "width," "thickness", "upper," "lower," "front," "rear," "left," "right," "vertical," "horizontal," "top," "bottom," "inner," "clockwise," "counterclockwise," etc. are orientational and positional relationships based on the drawings, which are intended only for facilitating description of the present disclosure and simplifying the illustrations, not for indicating or implying that the devices or elements have to possess those specific orientations or have to be configured and operated with those specific orientations; therefore, they should not be construed as limitations to the present disclosure.

Besides, the terms "first" and "second" are only used for description purposes, which shall not be construed as indicating or implying an importance degree or implicitly indicating the number of technical features as indicated. Therefore, the features limited by "first" and "second" may explicitly or implicitly include one or more of such features. In the description of the present disclosure, unless otherwise indicated, "plurality" indicates two or above.

In the present disclosure, unless otherwise explicitly provided and limited, the terms such as "mount," "connect," "couple," and "secure" should be understood broadly, which, for example, may refer to a secured connection, a detachable connection, or an integral connection; the connection may be a mechanical connection or an electric connection; the connection may also be a direct connection, or an indirect connection via an intermediate medium; the connection may also be a communication between the insides of two elements. To a person of normal skill in the art, specific meanings of the above terms in the present disclosure may be understood based on specific conditions.

In the present disclosure, unless otherwise explicitly provided and limited, the expression that a first feature is "above" or "below" a second feature may include a direct contact between the first feature and the second feature or may include a circumstance in which although the first feature and the second feature do not contact directly, they contact via a further feature therebetween. Moreover, the expression that the first feature is "above" or "over" or "on" the second feature includes a situation in which the first feature is exactly or generally over the second feature or only indicates that the horizontal height of the first feature is higher than the second feature. The expression that the first feature is "under" or "below" or "beneath" the second feature includes a situation in which the first feature is exactly or generally below the second feature or only indicates that the horizontal height of the first feature is lower than the second feature.

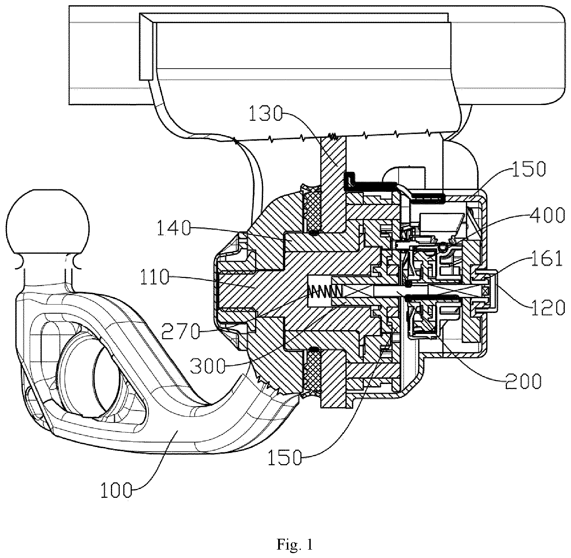

Referring to Figs. 1-4, embodiments of the present disclosure disclose a manual and electric dual-mode trailer hitching apparatus, comprising: a trailer hitch 100 and a driving device for actuating the trailer hitch 100, wherein the driving device comprises a housing 160, a motor, a transmission arrangement 400, a main shaft 110, and a rotary shaft 200, the trailer hitch 100 being coupled to the main shaft 110, the rotary shaft 200 having an automated position and a manual position, the rotary shaft 200 comprising a first transmission section 220, a second transmission section 240, and a rotating section 250 between the first transmission section 220 and the second transmission section 240, wherein when the rotary shaft 200 moves axially to the automated position, the first transmission section 220 is fitted with the transmission arrangement 400 and the second transmission section 240 is fitted with the main shaft 110, such that the motor drives the rotary shaft 200 and the main shaft 110 to rotate via the transmission arrangement 400; wherein when the rotary shaft 200 moves axially to the manual position, the second transmission section 240 is fitted with the main shaft 110, such that the rotary shaft 200 rotates relative to the transmission arrangement 400; and wherein a locking member 120 is detachably mounted on the housing 160, the locking member 120 being configured to hold the rotary shaft 200 at the automated position.

The manual and electric dual-mode trailer hitching apparatus according to the present disclosure supports an automated mode and a manual mode, wherein in the automated mode, the trailer hitch 100 may be automatically stored and deployed, and in the manual mode, the user manually applies an external force to the rotary shaft 200 to drive the trailer hitch 100.

In an embodiment, the driving device in the trailer hitching apparatus is configured to actuate the trailer hitch 100, such that the trailer hitch 100 can be stored or deployed to facilitate use. The rotary shaft 200 in the driving device may drive the main shaft 110 to rotate; and since the trailer hitch 100 is coupled to the main shaft 110, the trailer hitch 100 may shift between the stored position and the deployed position following rotation of the main shaft 110.

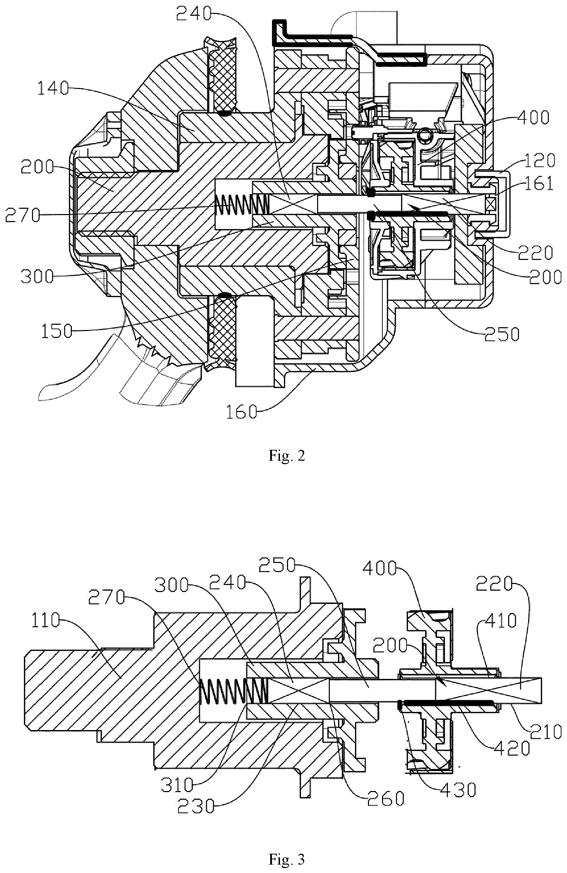

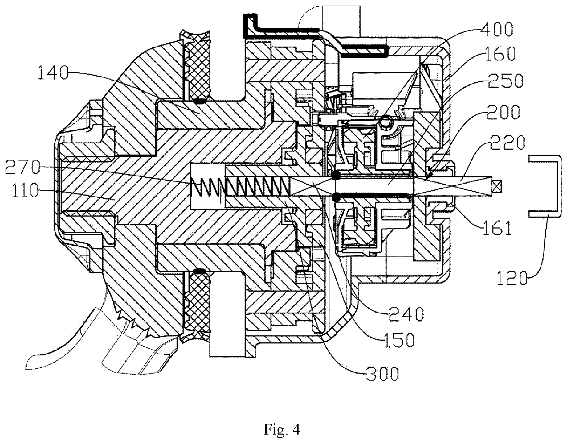

The position of the rotary shaft 200 in the driving device is variable so as to be capable of shifting between the automated position and the manual position. When the rotary shaft 200 is disposed at the automated position (see Fig. 2 and Fig. 3, where the rotary shaft is disposed at the automated position), the first transmission section 220 of the rotary shaft 200 is fitted with the transmission arrangement 400, such that the rotating power of the motor may be applied to the rotary shaft 200 to drive the rotary shaft 200 to rotate. When the rotary shaft 200 shifts to the manual position (see Fig. 4, where the locking member is removed from the housing and the rotary shaft is located at the manual position), the transmission arrangement 400 suspends transmitting the rotating power to the rotary shaft 200, in which circumstance the user may rotate the rotary shaft 200 with a tool so as to manually drive the main shaft to rotate to shift the trailer hitch 100 between the stored status and the deployed status. Besides, when the rotary shaft 200 is disposed at the manual position, the user's rotation of the rotary shaft 200 does not activate the transmission arrangement 400, such that the motor and the transmission arrangement 400 do not interfere with rotation of the rotary shaft 200. In this way, when the motor or the transmission arrangement 400 fails or the driving device lacks power, the trailer hitch 100 may be manually maneuvered to rotate.

The locking member 120 is configured to securely hold the position of the rotary shaft 200, such that positional displacement of the rotary shaft 200 does not affect normal use of the trailer hitching apparatus; after the locking member 120 is removed, the rotary shaft 200 is released and thus enabled for position shift to switch the trailer hitching apparatus from the automated mode to the manual mode.

From the perspective of the overall structure and the connection relationship, the trailer hitching apparatus further comprises a connecting plate 130, a shaft sleeve 140, a locking disc 300, and a cover plate 150;
the connecting plate 130 is mounted on the rear bumper of a vehicle, and the shaft sleeve 140 is sleeved outside the main shaft 110 and passes through the connecting plate 130; meanwhile, the shaft sleeve 140 is securely mounted on the connecting plate 130 via bolts; the trailer hitch 100 is connected to a portion of the main shaft 110 projecting out of the shaft sleeve 140;
the main shaft 110 is sleeved outside the locking disc 300, the locking disc 300 is sleeved over the rotary shaft 200, a cover plate 150 is further mounted at an end portion of the main shaft 110, and the cover plate 150 and the main shaft 110 serve to limit the locking disc 300 therebetween; besides, a bearing is provided between the cover plate 150 and the locking disc 300, such that when the rotary shaft 200 rotates, the bearing drives the locking disc 300 and the main shaft 110 to rotate; and the cover plate 150 and the shaft sleeve 140 are connected via bolts; and
the motor and the transmission arrangement 400 are mounted in the housing 160; the housing 160 is secured on the connecting plate 130, wherein two cavities are limited inside the housing, one cavity being configured to accommodate the motor and the other being configured to accommodate the transmission arrangement 400; the transmission arrangement 400 comprises worm-wheel and worm, the worm-wheel being sleeved over the rotary shaft 200.

In the embodiment, a through-hole 410 is provided in the worm-wheel of the transmission arrangement 400, the rotary shaft 200 passing through the through-hole 410, wherein the rotating power of the motor is transmitted to the worm-wheel via the worm; and then, the worm-wheel drives the rotary shaft 200, causing the trailer hitch 100 to rotate gradually. The through-hole 410 as provided allows the rotary shaft 200 to move axially, such that when the rotary shaft 200 is disposed at the manual position, the first transmission section 220 may be disengaged from the transmission arrangement; in this circumstance, the motor does not drive the rotary shaft 200 via the transmission arrangement 400.

An opening 161 is provided in the housing 160 at a position corresponding to the through-hole 410 in the worm-wheel. When the rotary shaft 200 shifts to the manual position, the driving device projects out of the opening 161, such that the user may directly access the rotary shaft 200 and applies a transmission force to the exposed portion of the rotary shaft 200. This facilitates operation, and also eliminates a need to set an additional transmission member on the driving device to transmit a rotating force to the rotary shaft 200 when the rotary shaft 200 is in the manual position. The locking member 120 is mounted at the opening 161 in the housing 160 and maintains abutting against the rotary shaft 200; in this way, the rotary shaft 200 is abutted against by the locking member 120 such that it cannot move towards the manual position, thereby holding the trailer hitch 100 to the automated mode.

A force is needed to drive the transmission arrangement 400; therefore, in the manual mode, if the transmission arrangement 400 maintains fitted with the rotary shaft 200, the transmission arrangement 400 interferes with rotation of the rotary shaft 200, which makes it strenuous for the user to rotate the rotary shaft 200. Therefore, in the present disclosure, the rotary shaft 200 is set to disengage from the transmission arrangement 400 after shifting to the manual position. Specifically, a first driving surface 210 is provided on the first transmission section 220, and a second driving surface 420 is provided on the inner wall of the through-hole 410, such that when the rotary shaft 200 is disposed at the automated position, the first driving surface 210 and the second driving surface 420 are fitted, and the motor may apply a rotating power to the rotary shaft 200 via the second driving surface 420; after the rotary shaft 200 moves axially, the first transmission section 220 exits the through-hole 410; when the trailer hitch shifts to the manual position, the first driving surface 210 and the second driving surface 420 are axially disengaged, such that no rotating power of the motor is further applied to the rotary shaft 200; likewise, when the rotary shaft 200 rotates, the transmission arrangement 400 and the motor do not interfere with rotation of the rotary shaft 200 via the second driving surface 420.

Preferably, the first transmission section 220 is a square shaft, and the through-hole 410 in the worm-wheel is a square hole, each circumferential surface of the square shaft serves as the first driving surface 210, and each inner wall of the square hole serves as the second driving surface 420, such that when the first driving surface 210 and the second driving surface 420 maintain a fitted status, the transmission is stable, and after they are disengaged, they do not interfere with each other; moreover, the square shaft and the square hole may be refitted with less than 90° rotation of the rotary shaft 200 when being reset.

In addition, the first transmission section may also be a shaft body with a polygonal cross section, or the first transmission section and the through-hole may be fitted in a slider-slideway manner.

Referring to Fig. 3, irrespective of the manual mode or the automated mode, the trailer hitch 100 is driven by the main shaft 110 that is driven to rotate; therefore, when the rotary shaft 200 moves axially, it needs to maintain a transmission relationship with the main shaft 110. As such, in another embodiment of the present disclosure, a third driving surface 310 is provided on the locking disc 300, and a fourth driving surface 230 maintaining fitted with the third driving surface 310 is provided on the second transmission section 240, such that when the rotary shaft 200rotates, the fourth driving surface 230 may transmit the rotating power to the third driving surface 310 to thereby drive the main shaft 110 to rotate; since the third driving surface 310 and the fourth driving surface 230 may maintain fitted, the rotary shaft 200 may drive the main shaft 110 irrespective of whether it is driven by the motor or by user maneuvering.

Preferably, the second transmission section 240 is a square shaft, and a square hole is also provided in the locking disc 300, each circumferential surface of the second transmission section 240 serves as the fourth driving surface 230, and each inner wall of the square hole in the locking disc 300 serves as the third driving surface 310; the second transmission section 240 is disposed in the square hole of the locking disc 300; moreover, when the rotary shaft 200 shifts to the manual position, the second transmission section 240 is still disposed in the square hole of the locking disc 300; in this way, the third driving surface 310 and the fourth driving surface 230 may maintain the fitted status.

In addition, the second transmission section may also be a shaft body with a polygonal cross section, or a non-circular shaft body; or the second transmission section and the locking disc may be fitted in a slider-slideway manner.

The first transmission section 220 and the second transmission section 240 are provided on the shaft body; therefore, when the rotary shaft 200 shifts between the automated position and the manual position, if the second transmission section 240 enters the transmission arrangement 400, the transmission arrangement 400 may be still driven via the fourth driving surface 230 on the second transmission section 240. Referring to Fig. 3, in another embodiment of the present disclosure, a stop member 430 is further provided on the transmission arrangement 400, the stop member 430 being configured to stop the rotary shaft 200 when the rotary shaft 200 shifts towards the manual position, thereby blocking the fourth driving surface 230 from entering the through-hole 410 in the transmission arrangement 400. The stop member 430 limits an axial displacement distance of the rotary shaft 200 relative to the driving device, such that when the rotary shaft 200 shifts to the manual position, the fourth driving surface 230 is held outside the worm-wheel while maintaining a fitting relationship with the third driving surface 310. In this way, when the trailer hitching arrangement is located in the manual mode, the fourth driving surface 230 suspends transmitting the rotating power to the transmission arrangement 400, such that the transmission arrangement 400 does not interfere with rotation of the driving shaft. Of course, the stop member may also be provided on the rotary shaft.

In this embodiment, the second transmission section 240 is a square shaft, the rotating section 250 is a cylindrical shaft, and a step 260 is formed between the rotating section 250 and the second transmission section 240. The stop member 430 may be a washer provided at the hub of the worm-wheel, so as to allow the rotating section 250 to pass through normally but stop continued movement of the rotary shaft 200 when meeting the step 260. Meanwhile, the first transmission section 220 projects out of the through-hole 410, and the rotating section 250 is disposed in the through-hole 410, such that even the rotating section 250 contacts the inner wall of the through-hole 410, the friction therebetween does not suffice to affect normal rotation of the rotary shaft 200. In addition, the rotating section may also be a shaft body with a smaller diameter so as to ensure a gap between the transmission arrangement and the locking disc.

Referring to Figs. 1 to 4, to facilitate use, in another embodiment of the present disclosure based on the embodiment described above, an elastic member 270 applying an axial force to the rotary shaft 200 is further provided in the driving device so as to provide a force for shifting the rotary shaft 200 from the automated position to the manual position.

The elastic member 270 can generate an elastic force, such that when the rotary shaft 200 is located at the automated position, the elastic member 270 maintains an accumulated elastic force, such that when the locking member 120 is removed, the released rotary shaft 200 can shift to the automated position under the elastic force; in this way, the user needn't manually pull the rotary shaft 200 towards the manual position, which enhances user experience.

The elastic member 270 is preferably a spring; the square hole in the locking disc 300 is a via-hole; one end of the spring abuts against the rotary shaft 200, and the other end of the spring abuts against the main shaft 110; when the rotary shaft 200 is disposed at the automated position, the spring is in a compressed status; after the locking member 120 is removed, the spring pushes the rotary shaft 200. The locking disc 300 does not have an axial positional displacement; therefore, the spring may maintain an invariable position in the radial direction. Of course, the elastic member may also be made of silicone and other materials with elasticity.

Different from the embodiments above, in another embodiment of the present disclosure, bouncing means is provided in the driving device, wherein the driving device disposed at the automated position abuts against the bouncing means so as to allow the rotary shaft, when being pressed, to shift to the manual position. The bouncing means is a standard element. To shift the rotary shaft between the automated position and the manual position, it is only needed to remove the locking member and press the rotary shaft towards the bouncing means, such that the bouncing means may output an elastic force to drive the rotary shaft to move axially; in this way, upon removal of the locking member, the rotary shaft does not pop out abruptly to strike the user; besides, the operation becomes easy because the user needn't pull the rotary shaft.

One end of the bouncing means is securely mounted on the main shaft, while the other end is inserted in the locking disc to face the rotary shaft. When the rotary shaft is disposed at the automated position, the rotary shaft may contact with the head of the bouncing means, or may be spaced therefrom. Besides, since the bouncing means does not apply a force to the rotary shaft towards the locking member direction, no relative acting force exists between the rotary shaft and the locking member; this avoids slack of the locking member.

Referring to Fig. 1, Fig. 2, and Fig. 4, in another embodiment of the present disclosure, a mounting structure of the locking member 120 on the housing 160 is specifically illustrated.

The fitting relationship between the locking member 120 and the housing 160 is a detachable connection.

The locking member has a bottle-cap shape, the opening in the housing is convex outwardly, and the locking member and the convex portion are in thread-fitting; or,
the locking member includes a buckle, the opening in the housing is convex outwardly, a slot is provided around the outer periphery of the convex portion, and the buckle is snapped in the slot; or,
an apron is provided on the locking member, an end recessed-groove is provided around the outer periphery of the housing at the opening, and a layer of silicon washer is provided in the recessed groove; the apron is snapped in the recessed groove to squeeze the silicon washer, causing the silicon washer deformed to hold the locking member via friction; or,
an apron is provided on the locking member, the apron including a plurality of spring plates, the apron being inserted into the opening; during this process, the spring plates deform towards a center direction of the opening so as to be snapped into the opening; and with the elastic force of the spring plates, the spring plates are held to abut against the edge of the opening, such that the friction therebetween holds the locking member on the housing.

In addition, the locking member and the housing may also be secured via a fitting manner of bolt connection, such that to manually rotate the rotary shaft, it is only needed to dismantle the bolts.

What have been described above are only preferred embodiments of the present disclosure; however, the protection scope is defined by the scope of the appended claims.

## Claims

1. A manual and electric dual-mode trailer hitching apparatus, comprising: a trailer hitch (100) and a driving device for actuating the trailer hitch (100), wherein the driving device comprises a housing (160), a motor, a transmission arrangement (400), a main shaft (110), and a rotary shaft (200), the trailer hitch (100) being coupled to the main shaft (110), the rotary shaft (200) having an automated position and a manual position, the rotary shaft (200) comprising a first transmission section (220), a second transmission section (240), and a rotating section (250) between the first transmission section (220) and the second transmission section (240); **characterized in that** when the rotary shaft (200) moves axially to the automated position, the first transmission section (220) is fitted with the transmission arrangement (400), and the second transmission section (240) is fitted with the main shaft (110), such that the motor drives the rotary shaft (200) and the main shaft (110) to rotate via the transmission arrangement (400); wherein when the rotary shaft (200) moves axially to the manual position, the second transmission section (240) is fitted with the main shaft (110), such that the rotary shaft (200) rotates relative to the transmission arrangement (400); and wherein a locking member (120) is detachably mounted on the housing (160), the locking member (120) being configured to hold the rotary shaft (200) at the automated position.

2. The manual and electric dual-mode trailer hitching apparatus according to claim 1, wherein a through-hole (410) is provided in the transmission arrangement (400), the rotary shaft (200) passing through the through-hole (410).

3. The manual and electric dual-mode trailer hitching apparatus according to claim 2, wherein a first driving surface (210) is provided on the first transmission section (220), and a second driving surface (420) is provided on an inner wall of the through-hole (410), such that when the rotary shaft (200) is disposed at the automated position, the first driving surface (210) and the second driving surface (420) are fitted to drive the rotary shaft (200) to rotate.

4. The manual and electric dual-mode trailer hitching apparatus according to claim 1, wherein a locking disc (300) is provided between the rotary shaft (200) and the main shaft (110), the rotary shaft (200) driving the main shaft (110) via the locking disc (300); and wherein a third driving surface (310) is provided on the locking disc (300), and a fourth driving surface (230) is provided on the second transmission section (240), the fourth driving surface (230) maintaining fitted with the third driving surface (310).

5. The manual and electric dual-mode trailer hitching apparatus according to claim 4, wherein a stop member (430) is provided for one of the transmission arrangement (400) and the rotary shaft (200), the stop member (430) being configured to stop the rotary shaft (200) when the rotary shaft (200) axially shifts to the manual position, thereby blocking fitting between the fourth driving surface (230) and the transmission arrangement (400).

6. The manual and electric dual-mode trailer hitching apparatus according to claim 1, wherein an opening (161) is provided in the housing (160) corresponding to the rotary shaft (200), the locking member (120) being mounted at the opening (161) and maintaining abutting against the rotary shaft (200).

7. The manual and electric dual-mode trailer hitching apparatus according to claim 6, wherein the locking member (120) is thread-fitted with the housing (160); or, the locking member (120) is snap-fitted with the housing (160).

8. The manual and electric dual-mode trailer hitching apparatus according to claim 6, wherein a ring of slot is provided around an outer periphery of the opening (161), and the locking member (120) comprises an apron inserted in the slot and maintaining interference-fitted with the housing (160); or, the locking member (120) comprises an apron, the apron being inserted in the opening (161) and maintaining interference-fitted with the opening (161).

9. The manual and electric dual-mode trailer hitching apparatus according to any one of claims 1 to 8, wherein an elastic member (270) is provided in the driving device, the elastic member (270) applying an axial force to the rotary shaft (200) so as to provide a force for the rotary shaft (200) to shift from the automated position to the manual position.

10. The manual and electric dual-mode trailer hitching apparatus according to any one of claims 1 to 8 wherein bouncing means is further provided in the driving device, wherein the driving device at the automated position is opposite to the bouncing means to allow the rotary shaft (200), when being pressed, to shift to the manual position.

## Patentansprüche

1. Eine manuelle und elektrische Anhängerkupplungsvorrichtung mit zwei Betriebsarten, umfassend: eine Anhängerkupplung (100) und eine Antriebsvorrichtung zum Betätigen der Anhängerkupplung (100), wobei die Antriebsvorrichtung ein Gehäuse (160), einen Motor, eine Getriebeanordnung (400), eine Hauptwelle (110) und eine Drehwelle (200) umfasst, wobei die Anhängerkupplung (100) mit der Hauptwelle (110) gekoppelt ist, die Drehwelle (200) eine automatische Position und eine manuelle Position aufweist, wobei die Drehwelle (200) einen ersten Übertragungsabschnitt (220), einen zweiten Übertragungsabschnitt (240) und einen Drehabschnitt (250) zwischen dem ersten Übertragungsabschnitt (220) und dem zweiten Übertragungsabschnitt (240) umfasst; **dadurch gekennzeichnet, dass**, wenn sich die Drehwelle (200) axial in die automatische Position bewegt, der erste Getriebeabschnitt (220) mit der Getriebeanordnung (400) verbunden ist und der zweite Getriebeabschnitt (240) mit der Hauptwelle (110) verbunden ist, so dass der Motor die Drehwelle (200) und die Hauptwelle (110) über die Getriebeanordnung (400) zum Drehen antreibt; wobei, wenn sich die Drehwelle (200) axial in die manuelle Position bewegt, der zweite Getriebeabschnitt (240) mit der Hauptwelle (110) verbunden ist, so dass sich die Drehwelle (200) relativ zu der Getriebeanordnung (400) dreht; und wobei ein Verriegelungselement (120) abnehmbar an dem Gehäuse (160) angebracht ist, wobei das Verriegelungselement (120) so konfiguriert ist, dass es die Drehwelle (200) in der automatischen Position hält.

2. Manuelle und elektrische Anhängerkupplungsvorrichtung mit zwei Betriebsarten nach Anspruch 1, wobei in der Getriebeanordnung (400) ein Durchgangsloch (410) vorgesehen ist und die Drehwelle (200) durch das Durchgangsloch (410) verläuft.

3. Manuelle und elektrische Anhängerkupplungsvorrichtung mit zwei Betriebsarten nach Anspruch 2, wobei eine erste Antriebsfläche (210) an dem ersten Übertragungsabschnitt (220) vorgesehen ist und eine zweite Antriebsfläche (420) an einer Innenwand des Durchgangslochs (410) vorgesehen ist, so dass, wenn die Drehwelle (200) in der automatischen Position angeordnet ist, die erste Antriebsfläche (210) und die zweite Antriebsfläche (420) so verbunden sind, dass sie die Drehwelle (200) drehend antreiben.

4. Manuelle und elektrische Anhängerkupplungsvorrichtung mit zwei Betriebsarten nach Anspruch 1, wobei eine Verriegelungsscheibe (300) zwischen der Drehwelle (200) und der Hauptwelle (110) vorgesehen ist, wobei die Drehwelle (200) die Hauptwelle (110) über die Verriegelungsscheibe (300) antreibt; und wobei eine dritte Antriebsfläche (310) an der Verriegelungsscheibe (300) vorgesehen ist, und eine vierte Antriebsfläche (230) an dem zweiten Übertragungsabschnitt (240) vorgesehen ist, wobei die vierte Antriebsfläche (230) mit der dritten Antriebsfläche (310) verbunden bleibt.

5. Manuelle und elektrische Anhängerkupplungsvorrichtung mit zwei Betriebsarten nach Anspruch 4, wobei ein Anschlagelement (430) entweder für die Getriebeanordnung (400) oder die Drehwelle (200) vorgesehen ist, wobei das Anschlagelement (430) so konfiguriert ist, dass es die Drehwelle (200) anhält, wenn sich die Drehwelle (200) axial in die manuelle Position verschiebt, wodurch die Verbindung zwischen der vierten Antriebsfläche (230) und der Getriebeanordnung (400) blockiert wird.

6. Manuelle und elektrische Anhängerkupplungsvorrichtung mit zwei Betriebsarten nach Anspruch 1, wobei eine Öffnung (161) in dem Gehäuse (160) vorgesehen ist, die der Drehwelle (200) entspricht, wobei das Verriegelungselement (120) an der Öffnung (161) angebracht ist und an der Drehwelle (200) anliegt.

7. Manuelle und elektrische Anhängerkupplungsvorrichtung mit zwei Betriebsarten nach Anspruch 6, wobei das Verriegelungselement (120) mit dem Gehäuse (160) schraubig verbunden ist; oder das Verriegelungselement (120) mit dem Gehäuse (160) einrastend verbunden ist.

8. Manuelle und elektrische Anhängerkupplungsvorrichtung mit zwei Betriebsarten nach Anspruch 6, wobei ein Schlitzring an einen äußeren Umfang der Öffnung (161) vorgesehen ist und das Verriegelungselement (120) eine Schürze umfasst, die in den Schlitz eingesetzt ist und mit dem Gehäuse (160) in Presspassung gehalten wird; oder das Verriegelungselement (120) eine Schürze umfasst, wobei die Schürze in die Öffnung (161) eingesetzt ist und mit der Öffnung (161) in Presspassung gehalten wird.

9. Manuelle und elektrische Anhängerkupplungsvorrichtung mit zwei Betriebsarten nach einem der Ansprüche 1 bis 8, wobei ein elastisches Element (270) in der Antriebsvorrichtung vorgesehen ist, wobei das elastische Element (270) eine axiale Kraft auf die Drehwelle (200) ausübt, um eine Kraft für die Drehwelle (200) bereitzustellen, um von der automatischen Position in die manuelle Position zu wechseln.

10. Manuelle und elektrische Anhängerkupplungsvorrichtung mit zwei Betriebsarten nach einem der Ansprüche 1 bis 8, wobei in der Antriebsvorrichtung ferner ein Prellmittel vorgesehen ist, wobei die Antriebsvorrichtung in der automatischen Position dem Prellmittel gegenüberliegt, damit die Drehwelle (200), wenn sie gedrückt wird, in die manuelle Position wechseln kann.

## Revendications

1. Appareil d'attelage de remorque bimode manuel et électrique comprenant : un attelage de remorque (100) et un dispositif d'entraînement pour actionner l'attelage de remorque (100), le dispositif d'entraînement comprenant un boîtier (160), un moteur, un agencement de transmission (400), un arbre principal (110), et un arbre rotatif (200), l'attelage de remorque (100) étant accouplé à l'arbre principal (110), l'arbre rotatif (200) ayant une position automatisée et une position manuelle, l'arbre rotatif (200) comprenant une première section de transmission (220), une seconde section de transmission (240), et une section rotative (250) entre la première section de transmission (220) et la seconde section de transmission (240) ;
**caractérisé en ce que** lorsque l'arbre rotatif (200) se déplace axialement à la position automatisée, la première section de transmission (220) est pourvue de l'agencement de transmission (400), et la seconde section de transmission (240) est pourvue de l'arbre principal (110), de sorte que le moteur entraîne l'arbre rotatif (200) et l'arbre principal (110) en rotation par l'intermédiaire de l'agencement de transmission (400) ; lorsque l'arbre rotatif (200) se déplace axialement à la position manuelle, la seconde section de transmission (240) étant pourvue de l'arbre principal (110), de sorte que l'arbre rotatif (200) tourne par rapport à l'agencement de transmission (400) ; et un élément de verrouillage (120) étant monté amovible sur le boîtier (160), l'élément de verrouillage (120) étant conçu pour maintenir l'arbre rotatif (200) à la position automatisée.

2. Appareil d'attelage de remorque bimode manuel et électrique selon la revendication 1, un trou traversant (410) étant situé dans l'agencement de transmission (400), l'arbre rotatif (200) passant à travers le trou traversant (410).

3. Appareil d'attelage de remorque bimode manuel et électrique selon la revendication 2, une première surface d'entraînement (210) étant située sur la première section de transmission (220), et une seconde surface d'entraînement (420) étant située sur une paroi intérieure du trou de passage (410), de sorte que lorsque l'arbre rotatif (200) est disposé à la position automatisée, la première surface d'entraînement (210) et la seconde surface d'entraînement (420) soient ajustées pour entraîner la rotation de l'arbre rotatif (200).

4. Appareil d'attelage de remorque bimode manuel et électrique selon la revendication 1, un disque de verrouillage (300) étant situé entre l'arbre rotatif (200) et l'arbre principal (110), l'arbre rotatif (200) entraînant l'arbre principal (110) par l'intermédiaire du disque de verrouillage (300) ; et une troisième surface d'entraînement (310) étant située sur le disque de verrouillage (300), et une quatrième surface d'entraînement (230) étant située sur la seconde section de transmission (240), la quatrième surface d'entraînement (230) restant pourvue de la troisième surface d'entraînement (310).

5. Appareil d'attelage de remorque bimode manuel et électrique selon la revendication 4, un élément de butée (430) étant fourni pour l'un de l'agencement de transmission (400) et de l'arbre rotatif (200), l'élément de butée (430) étant conçu pour arrêter l'arbre rotatif (200) lorsque l'arbre rotatif (200) passe axialement à la position manuelle, bloquant ainsi l'ajustement entre la quatrième surface d'entraînement (230) et l'agencement de transmission (400).

6. Appareil d'attelage de remorque bimode manuel et électrique selon la revendication 1, une ouverture (161) étant située dans le boîtier (160) correspondant à l'arbre rotatif (200), l'élément de verrouillage (120) étant monté au niveau de l'ouverture (161) et restant en butée contre l'arbre rotatif (200).

7. Appareil d'attelage de remorque bimode manuel et électrique selon la revendication 6, l'élément de verrouillage (120) étant ajusté par filetage avec le boîtier (160) ; ou, l'élément de verrouillage (120) étant ajusté par encliquetage avec le boîtier (160).

8. Appareil d'attelage de remorque bimode manuel et électrique selon la revendication 6, un anneau de fente étant situé autour d'une périphérie extérieure de l'ouverture (161), et l'élément de verrouillage (120) comprenant un tablier inséré dans la fente et maintenu ajusté par interférence avec le boîtier (160) ; ou, l'élément de verrouillage (120) comprenant un tablier, le tablier étant inséré dans l'ouverture (161) et maintenu ajusté par interférence avec l'ouverture (161).

9. Appareil d'attelage de remorque bimode manuel et électrique selon l'une quelconque des revendications 1 à 8, un élément élastique (270) étant situé dans le dispositif d'entraînement, l'élément élastique (270) appliquant une force axiale à l'arbre rotatif (200) de sorte à fournir une force pour que l'arbre rotatif (200) passe de la position automatisée à la position manuelle.

10. Appareil d'attelage de remorque bimode manuel et électrique selon l'une quelconque des revendications 1 à 8, un moyen de rebondissement étant également situé dans le dispositif d'entraînement, le dispositif d'entraînement à la position automatisée étant opposé au moyen de rebondissement pour permettre à l'arbre rotatif (200), lorsqu'il est pressé, de passer à la position manuelle.
